# FASCICULE DE BREVET EUROPEEN

(11) **EP 3 152 627 B1**
(45) Date de publication et mention de la délivrance du brevet: **30.01.2019**
(21) Numéro de dépôt: 15725018.4
(22) Date de dépôt: 28.05.2015
(51) Int. Cl.: G04D 3/00, G04B 1/14, G04B 31/004

(54) **COMPOSANT HORLOGER EN MATERIAUX SOUDES**
AUS GESCHWEISSTEN MATERIALIEN HERGESTELLTE UHRENKOMPONENTE
TIMEPIECE COMPONENT MADE FROM WELDED MATERIALS

(30) Priorité: 03.06.2014 EP 14171018
(43) Date de publication de la demande: 12.04.2017
(73) Titulaire: Nivarox-FAR S.A., 2400 Le Locle (CH)
(72) Inventeur: CUSIN, Pierre, CH-1423 Villars-Burquin (CH); BAZIN, Jean-Luc, F-74500 Publier (FR)
(74) Mandataire: Goulette, Ludivine
(86) Numéro de dépôt international: PCT/EP2015/061774
(87) Numéro de publication internationale: WO 2015/185423

(56) Documents cités:
- EP-A1- 1 548 524
- EP-A2- 2 579 104
- WO-A1-03/032377
- WO-A2-2011/144813
- CH-A2- 707 164
- US-A1- 2008 217 821
- PERRET A: "Le Silicium Comme Matériau Dans La Fabrication De Pièces Mécaniques", BULLETIN DE LA SOCIETE SUISSE DE CHRONOMETRIE, SSC, NEUCHATEL, CH, no. 38, 9 novembre 2001 (2001-11-09), pages 27-29, XP002460036,

## Description

### Domaine de l'invention

L'invention se rapporte à un composant horloger en matériaux soudés et notamment un tel composant comportant un matériau à base de silicium ou de céramique.

### Arrière-plan de l'invention

Les assemblages actuels comportant une pièce à base de silicium sont généralement solidarisés par collage. La demande EP 2 579 104 A2 divulgue un composant horloger comportant une première pièce à base de silicium, une deuxième pièce à base de métal, une surface de la première pièce étant soudée sur une surface de la deuxième pièce afin de les solidariser. Une telle opération nécessite une extrême finesse d'application ce qui la rend coûteuse.

Il a également été développé des pièces à base de silicium comportant des zones de déformation élastique afin de pouvoir les assembler. Toutefois, suivant l'application, le collage peut parfois toujours être rendu nécessaire pour maintenir une force d'assemblage suffisante.

Enfin, il a également été développé des parties intermédiaires aptes à se déformer plastiquement destinées à être chassées tout en protégeant la pièce à base de silicium. Toutefois, elles ne donnent pas toujours satisfaction car, suivant les applications, elles peuvent être difficiles à mettre en oeuvre.

### Résumé de l'invention

Le but de la présente invention est de pallier tout ou partie les inconvénients cités précédemment en proposant un composant horloger formé à partir d'une pièce comportant un matériau à base de silicium ou de céramique qui est directement soudé par rayonnement électromagnétique sur une autre pièce comme, par exemple, un métal ou un alliage métallique.

A cet effet, selon un premier mode de réalisation, l'invention se rapporte à un composant horloger comportant une première pièce à base de silicium, une deuxième pièce à base de métal caractérisé en ce qu'une surface de la première pièce est soudée par rayonnement électromagnétique du type laser directement sur une surface de la deuxième pièce afin de les solidariser sans apport de matière.

Selon l'invention, la première pièce à base de silicium comporte du silicium monocristallin, du silicium monocristallin dopé, du silicium polycristallin, du silicium polycristallin dopé, du silicium poreux, de l'oxyde de silicium, du quartz, de la silice, du nitrure de silicium ou du carbure de silicium.

Selon un deuxième mode de réalisation, l'invention se rapporte à un composant horloger, comportant une première pièce à base de céramique, une deuxième pièce à base de métal caractérisé en ce qu'une surface de la première pièce est soudée par rayonnement électromagnétique du type laser sur une surface de la deuxième pièce afin de les solidariser.

Selon l'invention, la première pièce à base de céramique comporte du verre photostructurable, du borosilicate, de l'aluminosilicate, du verre de quartz, du zérodur, du corindon monocristallin, du corindon polycristallin, de l'alumine, de l'oxyde d'aluminium, du nitrure d'aluminium, du rubis monocristallin, du rubis polycristallin, de l'oxyde de zirconium, de l'oxyde de titane, du nitrure de titane, du carbure de titane, du nitrure de tungstène, du carbure de tungstène, du nitrure de bore ou du carbure de bore.

Avantageusement selon les deux modes de réalisation de l'invention, on comprend que le soudage direct des surfaces rend sensiblement invisible la solidarisation car le rayonnement électromagnétique du type laser agit directement à l'interface entre les deux pièces. Par conséquent, le composant horloger est du type composite sans qu'il soit perceptible comment il a été obtenu sauf par vérification destructive. Avantageusement selon l'invention, les parties déjà développées peuvent donc être utilisées et désormais solidarisées avec une meilleure adhérence et une garantie de tenue dans le temps plus élevé qu'avec le collage.

Enfin, les parties à base de céramique ou de silicium n'ont pas à avoir de moyens de déformation élastique ou plastique évitant qu'elles soient brisées par un assemblage car le soudage solidarise directement les surfaces des parties à base de céramique ou de silicium contre les surfaces des parties à base de métal. On comprend ainsi l'avantage immédiat dans le domaine de l'horlogerie tant du point de vue de la compacité (pas de volume supplémentaire nécessaire aux moyens de déformation élastique ou plastique) que de la robustesse (soudure matériau - matériau).

Conformément à d'autres variantes avantageuses des deux modes de réalisation de l'invention :
- la première pièce à base de silicium ou de céramique comporte en outre au moins un revêtement partiel d'oxyde de silicium, de nitrure de silicium, de carbure de silicium ou d'un allotrope du carbone ;
- la première pièce et/ou la deuxième pièce forme un spiral, une cheville, un balancier, un axe, un plateau, une ancre, une tige, une baguette, une fourchette, une palette, un dard, un mobile, une roue, un arbre, un pignon, un pont, une platine, une masse oscillante, une tige de remontoir, un palier ou un coussinet ;
- la deuxième pièce comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

De plus, l'invention se rapporte à une pièce d'horlogerie caractérisée en ce qu'elle comporte un composant horloger selon l'une des variantes précédentes.

De manière additionnelle, l'invention se rapporte également à un procédé de fabrication d'un composant horloger selon le premier mode de réalisation pour une pièce d'horlogerie comportant les étapes suivantes :
- former une première partie à base de silicium et une deuxième partie à base de métal ;
- monter une surface de la première partie sur une surface de la deuxième partie ;
- souder, par rayonnement électromagnétique du type laser, la surface de la première partie montée sur la surface de la deuxième partie afin de les solidariser.

Enfin, l'invention se rapporte également à un procédé de fabrication d'un composant horloger selon le deuxième mode de réalisation pour une pièce d'horlogerie comportant les étapes suivantes :
- former une première partie à base de céramique et une deuxième partie à base de métal ;
- monter une surface de la première partie sur une surface de la deuxième partie ;
- souder, par rayonnement électromagnétique du type laser, la surface de la première partie montée sur la surface de la deuxième partie afin de les solidariser.

Avantageusement selon les deux modes de réalisation de l'invention, on comprend que le procédé est simple, rapide et qu"il n'est pas nécessaire d'apporter de la matière pour solidariser les deux matériaux ni d'appliquer une force de rapprochement entre les première et deuxième pièces. De plus, le rayonnement électromagnétique du type laser offre une grande flexibilité quant à la localisation et la forme (plate, en pente, non rectiligne, etc.) des zones qui doivent être soudées. On comprend ainsi que les parties déjà développées peuvent être utilisées et désormais solidarisées avec une meilleure adhérence et une garantie de tenue dans le temps plus élevé qu'avec le collage.

Conformément à d'autres variantes avantageuses des deux modes de réalisation de l'invention :
- la première pièce à base de silicium ou de céramique comporte en outre au moins un revêtement partiel d'oxyde de silicium, de nitrure de silicium, de carbure de silicium ou d'un allotrope du carbone ;
- l'une des première et deuxième pièces est opaque à la longueur d'onde dudit rayonnement électromagnétique du type laser afin de souder lesdites surfaces des première et deuxième pièces lorsqu'elles sont l'une contre l'autre ;
- un matériau intermédiaire est déposé à l'interface des première et deuxième pièces lorsque ces dernières sont transparentes à la longueur d'onde dudit rayonnement électromagnétique du type laser afin d'induire un échauffement suffisamment intense pour souder lesdites première et deuxième pièces ;
- la première pièce et/ou la deuxième pièce forme un spiral, une cheville, un balancier, un axe, un plateau, une ancre, une tige, une baguette, une fourchette, une palette, un dard, un mobile, une roue, un arbre, un pignon, un pont, une platine, une masse oscillante, une tige de remontoir, un palier ou un coussinet ;
- la deuxième pièce comporte un alliage de fer, un alliage de cuivre, un alliage de nickel, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une représentation en perspective de composants horlogers selon la présente invention ;
- la figure 2 est une vue en coupe d'un composant horloger selon l'invention.

### Description détaillée des modes de réalisation préférés

Comme expliqué ci-dessus, l'invention se rapporte à un composant formé à l'aide d'une pièce dont le matériau ne comporte pas de domaine plastique utilisable, c'est-à-dire avec un domaine plastique très restreint, avec une deuxième pièce comportant le même type de matériau ou un autre type de matériau.

Ce composant a été imaginé pour des applications dans le domaine horloger et est rendu nécessaire par la part croissante que tiennent les matériaux fragiles comme ceux à base de silicium ou de céramique. On peut, à titre d'exemple, envisager de former le spiral, le balancier, l'ancre, les ponts, la masse oscillante ou même les mobiles comme les roues d'échappement totalement ou partiellement à base de matériaux fragiles.

Toutefois, le fait de toujours pouvoir utiliser des pièces habituelles comme, par exemple, les axes en acier dont la fabrication est maîtrisée, est une contrainte qui est difficile à concilier avec l'utilisation de pièces ne comportant pas de domaine plastique. En effet, lors de tests effectués, le chassage d'un axe en acier est impossible et brise systématiquement les pièces fragiles, c'est-à-dire ne comportant pas de domaine plastique utilisable. Par exemple, il est apparu que le cisaillement généré par l'entrée de l'axe métallique dans l'ouverture d'une pièce en silicium monocristallin revêtue de dioxyde de silicium brise systématique cette dernière.

C'est pourquoi, selon un premier mode de réalisation, l'invention se rapporte à un composant horloger comportant une première pièce à base de silicium, une deuxième pièce à base de métal caractérisé en ce qu'une surface de la première pièce est soudée par rayonnement électromagnétique du type laser sur une surface de la deuxième pièce afin de les solidariser.

Avantageusement selon l'invention, on comprend qu'il n'est pas obligatoire d'apporter de la matière pour solidariser les deux pièces comme pour le collage ou l'utilisation d'une partie intermédiaire. Il n'est pas non plus nécessaire de former des structures particulières dans la première pièce pour pouvoir l'assembler dans la deuxième pièce. Ainsi, à titre d'exemple, un simple trou permettant de coopérer avec un axe de section correspondante est suffisant, le trou étant formé dans la première pièce ou dans la deuxième pièce.

On comprend donc que les pièces déjà développées peuvent être utilisées et désormais soudés par rayonnement électromagnétique du type laser avec une meilleure adhérence et une garantie de tenue dans le temps plus élevé qu'avec un collage. Enfin, le soudage direct des surfaces rend sensiblement invisible la solidarisation. En effet, il suffit que l'une des première et deuxième pièces soit opaque et, une autre, transparente à la longueur d'onde dudit rayonnement électromagnétique du type laser pour souder lesdites surfaces des première et deuxième pièces lorsqu'elles sont l'une contre l'autre. Un tel soudage par rayonnement électromagnétique du type laser est, par exemple, expliqué dans le document EP 1 436 830. De plus, comme expliqué dans le document EP 1 436 830, si les première et deuxième pièces sont transparentes à la longueur d'onde dudit rayonnement électromagnétique du type laser, de manière optionnelle, un matériau intermédiaire destiné à favoriser la solidarisation entre les deux matériaux peut être utilisé. Ainsi, ce matériau intermédiaire forme une couche destinée à induire un échauffement suffisamment intense pour générer la fusion des deux matériaux.

Selon le premier mode de réalisation, la première pièce à base de silicium comporte, de manière préférée, du silicium monocristallin, du silicium monocristallin dopé, du silicium polycristallin, du silicium polycristallin dopé, du silicium poreux, de l'oxyde de silicium, du quartz, de la silice, du nitrure de silicium ou du carbure de silicium. De plus, la première pièce à base de silicium peut en outre comporter optionnellement au moins un revêtement partiel d'oxyde de silicium, de nitrure de silicium, de carbure de silicium ou d'un allotrope du carbone suivant les applications prévues du composant horloger.

Selon un deuxième mode de réalisation, l'invention se rapporte à un composant horloger comportant une première pièce à base de céramique, une deuxième pièce à base de métal caractérisé en ce qu'une surface de la première pièce est soudée par rayonnement électromagnétique du type laser sur une surface de la deuxième pièce afin de les solidariser.

Avantageusement selon l'invention, on comprend qu'il n'est pas obligatoire d'apporter de la matière pour solidariser les deux pièces comme pour le collage ou l'utilisation d'une partie intermédiaire. Il n'est pas non plus nécessaire de former des structures particulières dans la première pièce pour pouvoir l'assembler dans la deuxième pièce. Ainsi, à titre d'exemple, un simple trou permettant de coopérer avec un axe de section correspondante est suffisant, le trou étant formé dans la première pièce ou dans la deuxième pièce.

On comprend donc que les pièces déjà développées peuvent être utilisées et désormais soudés par rayonnement électromagnétique du type laser avec une meilleure adhérence et une garantie de tenue dans le temps plus élevé qu'avec un collage. Enfin, le soudage direct des surfaces rend sensiblement invisible la solidarisation. En effet, il suffit que l'une des première et deuxième pièces soit opaque et, une autre, transparente à la longueur d'onde dudit rayonnement électromagnétique du type laser pour souder lesdites surfaces des première et deuxième pièces lorsqu'elles sont l'une contre l'autre. Un tel soudage par rayonnement électromagnétique du type laser est, par exemple, expliqué dans le document EP 1 436 830. De plus, comme expliqué dans le document EP 1 436 830, si les première et deuxième pièces sont transparentes à la longueur d'onde dudit rayonnement électromagnétique du type laser, de manière optionnelle, un matériau intermédiaire destiné à favoriser la solidarisation entre les deux matériaux peut être utilisé. Ainsi, ce matériau intermédiaire forme une couche destinée à induire un échauffement suffisamment intense pour générer la fusion des deux matériaux.

Selon le deuxième mode de réalisation, la première pièce à base de céramique comporte, de manière préférée, du verre photostructurable, du borosilicate, de l'aluminosilicate, du verre de quartz, du zérodur, du corindon monocristallin, du corindon polycristallin, de l'alumine, de l'oxyde d'aluminium, du nitrure d'aluminium, du rubis monocristallin, du rubis polycristallin, de l'oxyde de zirconium, de l'oxyde de titane, du nitrure de titane, du carbure de titane, du nitrure de tungstène, du carbure de tungstène, du nitrure de bore ou du carbure de bore. De plus, la première pièce à base de céramique peut en outre comporter optionnellement au moins un revêtement partiel d'oxyde de silicium, de nitrure de silicium, de carbure de silicium ou d'un allotrope du carbone suivant les applications prévues du composant horloger.

Selon les deux modes de réalisation, la deuxième pièce comporte préférentiellement un alliage de fer comme de l'acier 15P, 20AP ou 316L, un alliage de cuivre comme du laiton, un alliage de nickel comme du maillechort, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

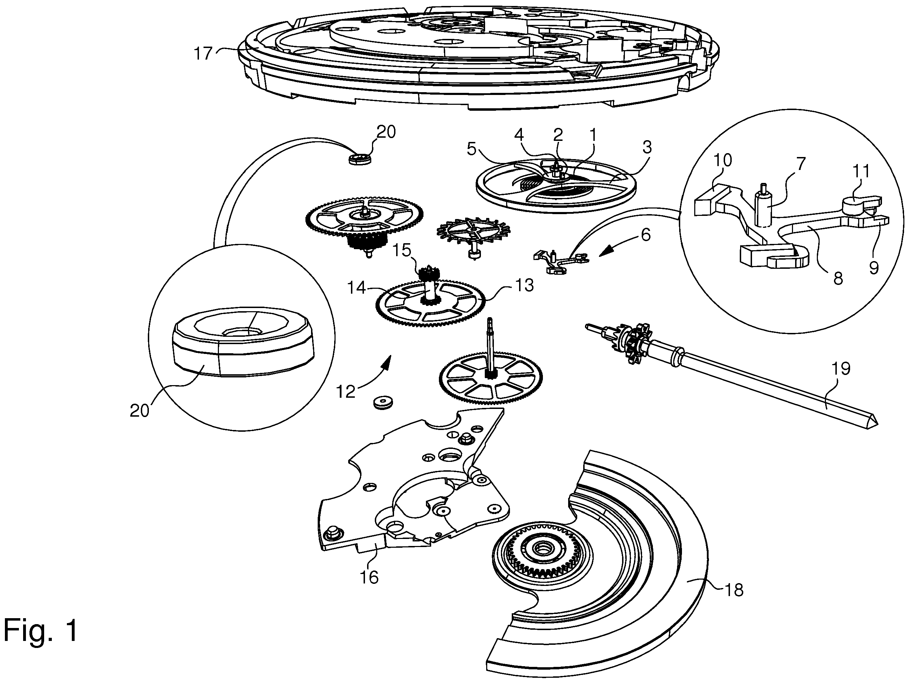

Selon les deux modes de réalisation de l'invention, la première pièce et/ou la deuxième pièce peuvent former une grande variété de composants horlogers pour une pièce d'horlogerie. A titre d'exemples nullement limitatifs et en relation avec la figure 1, la première pièce et/ou la deuxième pièce peuvent ainsi former notamment un spiral 1, une cheville 2, un balancier 3, un axe 4, un plateau 5, une ancre 6 comme une tige 7, une baguette 8, une fourchette 9, une palette 10 et un dard 11, un mobile 12 comme une roue 13, un arbre 14 et un pignon 15, un pont 16, une platine 17, une masse oscillante 18, une tige de remontoir 19 ou un coussinet 20.

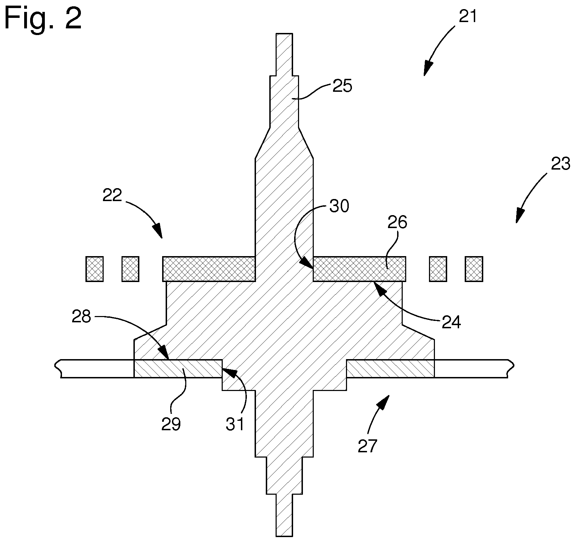

A titre d'exemple, la figure 2 présente un composant horloger 21 formant un résonateur 23 balancier - spiral monté rotatif sur un axe 25. Le spiral 22 comporte une lame s'étendant selon plusieurs spires et est monté sur une première portée 24 de l'axe 25 au moyen d'une virole 26. Le balancier 27 est monté sur une deuxième portée 28 de l'axe 25 au moyen d'un moyeu 29.

On comprend donc, par exemple, que l'axe 25 peut directement être soudé par rayonnement électromagnétique tel qu'un laser au niveau de ses portées 24, 28 et/ou ses surfaces cylindriques 30, 31 contre respectivement le spiral 22 et/ou le balancier 27. Il suffit que, soit l'axe 25, soit le spiral 22 et/ou le balancier 27, soit transparent à la longueur d'onde dudit rayonnement électromagnétique du type laser pour souder les surfaces en contact. Bien entendu, d'autres types de surface de contact peuvent être prévus comme des surfaces en pente ou des surfaces non rectilignes.

La présente invention ne se limite pas à l'exemple illustré mais est susceptible de diverses variantes et modifications qui apparaîtront à l'homme de l'art. En particulier, la deuxième pièce peut être d'un autre type de matériau qu'un métal ou un alliage métallique. Ainsi, de manière non limitative, la deuxième pièce peut également être en un même matériau que la première pièce, en céramique ou en un matériau semi-conducteur.

Toutefois, dans ce cas, comme expliqué dans le document EP 1 436 830, si les première et deuxième pièces sont transparentes à la longueur d'onde dudit rayonnement électromagnétique du type laser, de manière optionnelle, un matériau intermédiaire destiné à favoriser la solidarisation entre les deux matériaux, doit être utilisé. En effet, ce matériau intermédiaire formerait alors une couche destinée à induire un échauffement suffisamment intense pour générer la fusion des deux matériaux transparents à la longueur d'onde dudit rayonnement électromagnétique du type laser.

Comme expliqué ci-dessus, la première pièce et/ou la deuxième pièce peuvent former une variété de composants horlogers. A titre d'exemples additionnels à la figure 2, une ancre 6 pourrait être formé à partir d'une première pièce formant la baguette 8, les palettes 10 et la fourchette 9 et d'une première deuxième pièce formant la tige 7 et d'une seconde deuxième pièce formant le dard 11. Un mobile 12 pourrait être formé à partir d'une première pièce formant un arbre 14 et un pignon 15 et d'une deuxième pièce formant une roue 13. Un ensemble résonateur pourrait être formé à partir d'une première pièce formant un boîtier muni d'une cavité, d'une première deuxième pièce formant un résonateur diapason et d'une seconde deuxième pièce formant le couvercle enfermant le résonateur dans le boîtier.

De plus, une première pièce pourrait former un plateau 5 et être solidaire d'une deuxième pièce formant une cheville 2, une première pièce pourrait former une platine 17 ou un pont 16 et être solidaire de plusieurs deuxièmes pièces formant des coussinets 20 ou une première pièce pourrait former une masse oscillante 18 et être solidaire d'une deuxième pièce formant une cage de roulement.

Enfin, ledit au moins un revêtement partiel optionnel se saurait se limiter à de l'oxyde de silicium, de nitrure de silicium, du carbure de silicium ou un allotrope du carbone. Ainsi, suivant les applications prévues du composant horloger, d'autres matériaux peuvent être envisagés pour, par exemple, améliorer les qualités tribologiques, thermiques ou visuelles du composant horloger. A titre d'exemple, au moins un revêtement partiel de compensation thermique peut être déposé.

## Revendications

1. Composant horloger (21) comportant une première pièce (1, 2, 3, 4, 5, 6, 7, 8, 9, 10, 11, 12, 13, 14, 15, 16, 17, 18, 19, 20, 22, 25, 27) à base de silicium, une deuxième pièce (1, 2, 3, 4, 5, 6, 7, 8, 9, 10, 11, 12, 13, 14, 15, 16, 17, 18, 19, 20, 22, 25, 27) à base de métal **caractérisé en ce qu'**une surface (24, 28, 30, 31) de la première pièce est soudée par rayonnement électromagnétique du type laser directement sur une surface de la deuxième pièce afin de les solidariser sans apport de matière.

2. Composant horloger (21) selon la revendication précédente, **caractérisé en ce que** la première pièce à base de silicium comporte dù silicium monocristallin, du silicium monocristallin dopé, du silicium polycristallin, du silicium polycristallin dopé, du silicium poreux, de l'oxyde de silicium, du quartz, de la silice, du nitrure de silicium ou du carbure de silicium.

3. Composant horloger (21) selon la revendication précédente, **caractérisé en ce que** la première pièce à base de silicium comporte en outre au moins un revêtement partiel d'oxyde de silicium, de nitrure de silicium, de carbure de silicium ou d'un allotrope du carbone.

4. Composant horloger (21) comportant une première pièce (1, 2, 3, 4, 5, 6, 7, 8, 9, 10, 11, 12, 13, 14, 15, 16, 17, 18, 19, 20, 22, 25, 27) à base de céramique, une deuxième pièce (1, 2, 3, 4, 5, 6, 7, 8, 9, 10, 11, 12, 13, 14, 15, 16, 17, 18, 19, 20, 22, 25, 27) à base de métal **caractérisé en ce qu'**une surface (24, 28, 30, 31) de la première pièce est soudée par rayonnement électromagnétique du type laser directement sur une surface de la deuxième pièce afin de les solidariser sans apport de matière.

5. Composant horloger (21) selon la revendication précédente, **caractérisé en ce que** la première pièce à base de céramique comporte du verre photostructurable, du borosilicate, de l'aluminosilicate, du verre de quartz, du zérodur, du corindon monocristallin, du corindon polycristallin, de l'alumine, de l'oxyde d'aluminium, du nitrure d'aluminium, du rubis monocristallin, du rubis polycristallin, de l'oxyde de zirconium, de l'oxyde de titane, du nitrure de titane, du carbure de titane, du nitrure de tungstène, du carbure de tungstène, du nitrure de bore ou du carbure de bore.

6. Composant horloger (21) selon la revendication précédente, **caractérisé en ce que** la première pièce à base de céramique comporte en outre au moins un revêtement partiel d'oxyde de silicium, de nitrure de silicium, de carbure de silicium ou d'un allotrope du carbone.

7. Composant horloger (21) selon l'une des revendications précédentes, **caractérisé en ce que** la première pièce et/ou la deuxième pièce forme un spiral (1, 22), une cheville (2), un balancier (3, 27), un axe (4, 25), un plateau (5), une ancre (6), une tige (7), une baguette (8), une fourchette (9), une palette (10), un dard (11), un mobile (12), une roue (13), un arbre (14), un pignon (15), un pont (16), une platine (17), une masse oscillante (18), une tige de remontoir (19), un palier ou un coussinet (20).

8. Composant horloger (21) selon l'une des revendications précédentes, **caractérisé en ce que** la deuxième pièce comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

9. Pièce d'horlogerie **caractérisée en ce qu'**elle comporte un composant horloger (21) selon l'une des revendications précédentes.

10. Procédé de fabrication d'un composant horloger (21) pour une pièce d'horlogerie comportant les étapes suivantes :
- former une première partie (1, 2, 3, 4, 5, 6, 7, 8, 9, 10, 11, 12, 13, 14, 22, 23, 24, 25, 26, 27) à base de silicium et une deuxième partie (1, 2, 3, 4, 5, 6, 7, 8, 9, 10, 11, 12, 13, 14, 22, 23, 24, 25, 26, 27) à base de métal ;
- monter une surface (28, 29, 30, 31, 32) de la première partie sur une surface de la deuxième partie ;
- souder, par rayonnement électromagnétique du type laser, la surface (28, 29, 30, 31, 32) de la première partie montée directement sur la surface de la deuxième partie afin de les solidariser sans apport de matière.

11. Procédé selon la revendication précédente, **caractérisée en ce que** la première partie à base de silicium comporte du silicium monocristallin, du silicium monocristallin dopé, du silicium polycristallin, du silicium polycristallin dopé, du silicium poreux, de l'oxyde de silicium, du quartz, de la silice, du nitrure de silicium ou du carbure de silicium.

12. Procédé selon la revendication précédente, **caractérisée en ce que** la première partie à base de silicium comporte en outre au moins un revêtement partiel d'oxyde de silicium, de nitrure de silicium, de carbure de silicium ou d'un allotrope du carbone.

13. Procédé de fabrication d'un composant horloger (21) pour une pièce d'horlogerie comportant les étapes suivantes :
- former une première partie (1, 2, 3, 4, 5, 6, 7, 8, 9, 10, 11, 12, 13, 14, 22, 23, 24, 25, 26, 27) à base de céramique et une deuxième partie (1, 2, 3, 4, 5, 6, 7, 8, 9, 10, 11, 12, 13, 14, 22, 23, 24, 25, 26, 27) à base de métal ;
- monter une surface (28, 29, 30, 31, 32) de la première partie sur une surface de la deuxième partie ;
- souder, par rayonnement électromagnétique du type laser, la surface (28, 29, 30, 31, 32) de la première partie montée directement sur la surface de la deuxième partie afin de les solidariser sans apport de matière.

14. Procédé selon la revendication précédente, **caractérisée en ce que** la première partie à base de céramique comporte du verre photostructurable, du borosilicate, de l'aluminosilicate, du verre de quartz, du zerodur, du corindon monocristallin, du corindon polycristallin, de l'alumine, de l'oxyde d'aluminium, du nitrure d'aluminium, du rubis monocristallin, du rubis polycristallin, de l'oxyde de zirconium, de l'oxyde de titane, du nitrure de titane, du carbure de titane, du nitrure de tungstène, du carbure de tungstène, du nitrure de bore ou du carbure de bore.

15. Procédé selon la revendication précédente, **caractérisée en ce que** la première partie à base de céramique comporte en outre au moins un revêtement partiel d'oxyde de silicium, de nitrure de silicium, de carbure de silicium ou d'un allotrope du carbone.

16. Procédé selon l'une des revendications 10 à 15, **caractérisée en ce que** l'une des première et deuxième parties (1, 2, 3, 4, 5, 6, 7, 8, 9, 10, 11, 12, 13, 14, 22, 23, 24, 25, 26, 27) est opaque à la longueur d'onde dudit rayonnement électromagnétique du type laser afin de souder lesdites surfaces des première et deuxième parties lorsqu'elles sont l'une contre l'autre.

17. Procédé selon l'une des revendications 10 à 15, **caractérisée en ce qu'**un matériau intermédiaire est déposé à l'interface des première et deuxième pièces (1, 2, 3, 4, 5, 6, 7, 8, 9, 10, 11, 12, 13, 14, 22, 23, 24, 25, 26, 27) lorsque ces dernières sont transparentes à la longueur d'onde dudit rayonnement électromagnétique du type laser afin d'induire un échauffement suffisamment intense pour souder lesdites première et deuxième pièces.

18. Procédé selon l'une des revendications 10 à 17, **caractérisée en ce que** la première pièce et/ou la deuxième pièce forme un spiral (1, 22), une cheville (2), un balancier (3, 27), un axe (4, 25), un plateau (5), une ancre (6), une tige (7), une baguette (8), une fourchette (9), une palette (10), un dard (11), un mobile (12), une roue (13), un arbre (14), un pignon (15), un pont (16), une platine (17), une masse oscillante (18), une tige de remontoir (19), un palier ou un coussinet (20).

19. Procédé selon l'une des revendications 10 à 18, **caractérisée en ce que** la deuxième partie comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

## Patentansprüche

1. Uhrenkomponente (21) mit einem ersten Teil (1, 2, 3, 4, 5, 6, 7, 8, 9, 10, 11, 12, 13, 14, 15, 16, 17, 18, 19, 20, 22, 25, 27) auf Siliciumbasis und einem zweiten Teil (1, 2, 3, 4, 5, 6, 7, 8, 9, 10, 11, 12, 13, 14, 15, 16, 17, 18, 19, 20, 22, 25, 27) auf Metallbasis, **dadurch gekennzeichnet, dass** eine Oberfläche (24, 28, 30, 31) des ersten Teils durch elektromagnetische Laserstrahlung direkt mit einer Oberfläche des zweiten Teils verschweißt ist, um sie ohne Materialeintrag fest zu verbinden.

2. Uhrenkomponente (21) nach dem vorhergehenden Anspruch, **dadurch gekennzeichnet, dass** das erste Teil auf Siliciumbasis einkristallines Silicium, dotiertes einkristallines Silicium, polykristallines Silicium, dotiertes polykristallines Silicium, poröses Silicium, Siliciumoxid, Quarz, Siliciumdioxid, Siliciumnitrid oder Siliciumcarbid enthält.

3. Uhrenkomponente (21) nach dem vorhergehenden Anspruch, **dadurch gekennzeichnet, dass** das erste Teil auf Siliciumbasis ferner mindestens eine teilweise Beschichtung aus Siliciumoxid, Siliciumnitrid, Siliciumcarbid oder einem Kohlenstoffallotrop aufweist.

4. Uhrenkomponente (21) mit einem ersten Teil (1, 2, 3, 4, 5, 6, 7, 8, 9, 10, 11, 12, 13, 14, 15, 16, 17, 18, 19, 20, 22, 25, 27) auf Keramikbasis und einem zweiten Teil (1, 2, 3, 4, 5, 6, 7, 8, 9, 10, 11, 12, 13, 14, 15, 16, 17, 18, 19, 20, 22, 25, 27) auf Metallbasis, **dadurch gekennzeichnet, dass** eine Oberfläche (24, 28, 30, 31) des ersten Teils durch elektromagnetische Laserstrahlung direkt mit einer Oberfläche des zweiten Teils verschweißt ist, um sie ohne Materialeintrag aneinander zu befestigen.

5. Uhrenkomponente (21) nach dem vorhergehenden Anspruch, **dadurch gekennzeichnet, dass** das erste Teil auf Keramikbasis photostrukturierbares Glas, Borosilikat, Aluminosilikat, Quarzglas, Zerodur, einkristallinen Korund, polykristallinen Korund, Tonerde, Aluminiumoxid, Aluminiumnitrid, einkristallinen Rubin, polykristallinen Rubin, Zirkonoxid, Titanoxid, Titannitrid, Titancarbid, Wolframnitrid, Wolframcarbid, Bornitrid oder Borcarbid enthält.

6. Uhrenkomponente (21) nach dem vorhergehenden Anspruch, **dadurch gekennzeichnet, dass** das erste Teil auf Keramikbasis ferner mindestens eine teilweise Beschichtung aus Siliciumoxid, Siliciumnitrid, Siliciumcarbid oder einem Kohlenstoffallotrop enthält.

7. Uhrenkomponente (21) nach einem der vorhergehenden Ansprüche, **dadurch gekennzeichnet, dass** das erste Teil und/oder das zweite Teil eine Spiralfeder (1, 22) einen Hebelstein (2), eine Unruh (3, 22), eine Achse (4, 25), eine Hebelscheibe (5), einen Anker (6), einen Stift (7), eine Stange (8), eine Gabel (9), eine Palette (10), einen Sicherheitsstift (11), ein Drehteil (12), ein Rad (13), eine Welle (14), ein Ritzel (15), eine Brücke (16), eine Platine (17), eine Schwingmasse (18), einen Aufziehstift (19), ein Lager oder eine Lagerhülse (20) bilden.

8. Uhrenkomponente (21) nach einem der vorhergehenden Ansprüche, **dadurch gekennzeichnet, dass** das zweite Teil eine Eisenlegierung, eine Kupferlegierung, Nickel oder eine seiner Legierungen, Titan oder eine seiner Legierungen, Gold oder eine seiner Legierungen, Silber oder eine seiner Legierungen, Platin oder eine seiner Legierungen, Ruthenium oder eine seiner Legierungen, Rhodium oder eine seiner Legierungen oder Palladium oder eine seiner Legierungen enthält.

9. Zeitmessgerät, **dadurch gekennzeichnet, dass** es eine Uhrenkomponente (21) nach einem der vorhergehenden Ansprüche umfasst.

10. Verfahren zum Herstellen einer Uhrenkomponente (21) für ein Zeitmessgerät, umfassend die folgenden Schritte:
- Bilden eines ersten Teils (1, 2, 3, 4, 5, 6, 7, 8, 9, 10, 11, 12, 13, 14, 22, 23, 24, 25, 26, 27) auf Siliciumbasis und eines zweiten Teils (1, 2, 3, 4, 5, 6, 7, 8, 9, 10, 11, 12, 13, 14, 22, 23, 24, 25, 26, 27) auf Metallbasis;
- Montieren einer Oberfläche (28, 29, 30, 31, 32) des ersten Teils auf eine Oberfläche des zweiten Teils;
- Schweißen der Oberfläche (28, 29, 30, 31, 32) des montierten ersten Teils durch elektromagnetische Laserstrahlung direkt auf die Oberfläche des zweiten Teils, um sie ohne Materialeintrag fest zu verbinden.

11. Verfahren nach dem vorhergehenden Anspruch, **dadurch gekennzeichnet, dass** der erste Teil auf Siliciumbasis einkristallines Silicium, dotiertes einkristallines Silicium, polykristallines Silicium, dotiertes polykristallines Silicium, poröses Silicium, Siliciumoxid, Quarz, Siliciumdioxid, Siliciumnitrid oder Siliciumcarbid enthält.

12. Verfahren nach dem vorhergehenden Anspruch, **dadurch gekennzeichnet, dass** der erste Teil auf Siliciumbasis ferner mindestens eine Teilbeschichtung aus Siliciumoxid, Siliciumnitrid, Siliciumcarbid oder einem Kohlenstoffallotrop enthält.

13. Verfahren zum Herstellen einer Uhrenkomponente (21) für ein Zeitmessgerät, umfassend die folgenden Schritte:
- Bilden eines ersten Teils (1, 2, 3, 4, 5, 6, 7, 8, 9, 10, 11, 12, 13, 14, 22, 23, 24, 25, 26, 27) auf Keramikbasis und eines zweiten Teils (1, 2, 3, 4, 5, 6, 7, 8, 9, 10, 11, 12, 13, 14, 22, 23, 24, 25, 26, 27) auf Metallbasis;
- Montieren einer Oberfläche (28, 29, 30, 31, 32) des ersten Teils auf eine Oberfläche des zweiten Teils;
- Schweißen der Oberfläche (28, 29, 30, 31, 32) des montierten ersten Teils durch elektromagnetische Laserstrahlung direkt auf die Oberfläche des zweiten Teils, um sie ohne Materialeintrag fest zu verbinden.

14. Verfahren nach dem vorhergehenden Anspruch, **dadurch gekennzeichnet, dass** der erste Teil auf Keramikbasis photostrukturierbares Glas, Borosilikat, Aluminosilikat, Quarzglas, Zerodur, einkristallinen Korund, polykristallinen Korund, Tonerde, Aluminiumoxid, Aluminiumnitrid, einkristallinen Rubin, polykristallinen Rubin, Zirkonoxid, Titanoxid, Titannitrid, Titancarbid, Wolframnitrid, Wolframcarbid, Bornitrid oder Borcarbid enthält.

15. Verfahren nach dem vorhergehenden Anspruch, **dadurch gekennzeichnet, dass** der erste Teil auf Keramikbasis ferner mindestens eine teilweise Beschichtung aus Siliciumoxid, Siliciumnitrid, Siliciumcarbid oder einem Kohlenstoffallotrop aufweist.

16. Verfahren nach einem der Ansprüche 10 bis 15, **dadurch gekennzeichnet, dass** entweder der erste oder der zweite Teil (1, 2, 3, 4, 5, 6, 7, 8, 9, 10, 11, 12, 13, 14, 22, 23, 24, 25, 26, 27) für die Wellenlänge der elektromagnetischen Laserstrahlung undurchlässig ist, um die Oberfläche des ersten und des zweiten Teils zu verschweißen, wenn sie aneinander anliegen.

17. Verfahren nach einem der Ansprüche 10 bis 15, **dadurch gekennzeichnet, dass** auf die Grenzfläche des ersten und des zweiten Teils (1, 2, 3, 4, 5, 6, 7, 8, 9, 10, 11, 12, 13, 14, 22, 23, 24, 25, 26, 27) ein Zwischenmaterial abgelagert wird, wenn diese Letzteren für die Wellenlänge der elektromagnetischen Laserstrahlung durchlässig sind, um eine hinreichend intensive Erwärmung einzutragen, um das erste und das zweite Teil zu verschweißen.

18. Verfahren nach einem der Ansprüche 10 bis 17, **dadurch gekennzeichnet, dass** das erste Teil und/oder das zweite Teil eine Spiralfeder (1, 22) einen Hebelstein (2), eine Unruh (3, 22), eine Achse (4, 25), eine Hebelscheibe (5), einen Anker (6), einen Stift (7), eine Stange (8), eine Gabel (9), eine Palette (10), einen Sicherheitsstift (11), ein Drehteil (12), ein Rad (13), eine Welle (14), ein Ritzel (15), eine Brücke (16), eine Platine (17), eine Schwingmasse (18), einen Aufziehstift (19), ein Lager oder eine Lagerhülse (20) bilden.

19. Verfahren nach einem der Ansprüche 10 bis 18, **dadurch gekennzeichnet, dass** das zweite Teil eine Eisenlegierung, eine Kupferlegierung, Nickel oder eine seiner Legierungen, Titan oder eine seiner Legierungen, Gold oder eine seiner Legierungen, Silber oder eine seiner Legierungen, Platin oder eine seiner Legierungen, Ruthenium oder eine seiner Legierungen, Rhodium oder eine seiner Legierungen oder Palladium oder eine seiner Legierungen enthält.

## Claims

1. Timepiece component (21) comprising a first silicon-based part (1, 2, 3, 4, 5, 6, 7, 8, 9, 10, 11, 12, 13, 14, 15, 16, 17, 18, 19, 20, 22, 25, 27) and a second metal-based part (1, 2, 3, 4, 5, 6, 7, 8, 9, 10, 11, 12,13,14, 15, 16, 17, 18, 19, 20, 22, 25, 27), **characterized in that** one surface (24, 28, 30, 31) of the first part is welded using laser-type electromagnetic radiation onto a surface of the second part in order to secure said parts.

2. Timepiece component (21) according to the preceding claim, **characterized in that** the first silicon-based part includes single crystal silicon, doped single crystal silicon, polycrystalline silicon, doped polycrystalline silicon, porous silicon, silicon oxide, quartz, silica, silicon nitride or silicon carbide.

3. Timepiece component (21) according to the preceding claim, **characterized in that** the first silicon-based part further includes at least a partial coating of silicon oxide, silicon nitride, silicon carbide or an allotrope of carbon.

4. Timepiece component (21) comprising a first ceramic-based part (1, 2, 3, 4, 5, 6, 7, 8, 9, 10, 11, 12, 13, 14, 15, 16, 17, 18, 19, 20, 22, 25, 27) and a second metal-based part (1, 2, 3, 4, 5, 6, 7, 8, 9, 10, 11, 12,13,14, 15, 16, 17, 18, 19, 20, 22, 25, 27), **characterized in that** one surface (24, 28, 30, 31) of the first part is welded using laser-type electromagnetic radiation onto a surface of the second part in order to secure said parts.

5. Timepiece component (21) according to the preceding claim, **characterized in that** the first ceramic-based part includes photostructurable glass, borosilicate, aluminosilicate, quartz glass, zerodur, single crystal corundum, polycrystalline corundum, alumina, aluminium oxide, aluminium nitride, single crystal ruby, polycrystalline ruby, zirconium oxide, titanium oxide, titanium nitride, titanium carbide, tungsten nitride, tungsten carbide, boron nitride or boron carbide.

6. Timepiece component (21) according to the preceding claim, **characterized in that** the first ceramic-based part further includes at least a partial coating of silicon oxide, silicon nitride, silicon carbide or an allotrope of carbon.

7. Timepiece component (21) according to any of the preceding claims, **characterized in that** the first part and/or the second part forms a balance spring (1, 22), an impulse pin (2), a balance (3, 27), a staff (4, 25), a roller (5), a pallets (6), a pallet-staff (7), a pallet-lever (8), a pallet-fork (9), a pallet-stone (10), a guard-pin (11), a wheel set (12), a wheel (13), an arbor (14), a pinion (15), a bar (16), a plate (17), an oscillating weight (18), a winding stem (19), a bearing or a jewel hole (20).

8. Timepiece component (21) according to any of the preceding claims, **characterized in that** the second part includes an iron alloy, a copper alloy, nickel or an alloy thereof, titanium or an alloy thereof, gold or an alloy thereof, silver or an alloy thereof, platinum or an alloy thereof, ruthenium or an alloy thereof, rhodium or an alloy thereof, or palladium or an alloy thereof.

9. Timepiece **characterized in that** the timepiece includes a timepiece component (21) according to any of the preceding claims.

10. Method for fabrication of a timepiece component (21) for a timepiece comprising the following steps:
- forming a first silicon-based part (1, 2, 3, 4, 5, 6, 7, 8, 9, 10, 11, 12, 13, 14, 22, 23, 24, 25, 26, 27) and a second metal-based part (1, 2, 3, 4, 5, 6, 7, 8, 9, 10, 11, 12, 13, 14, 22, 23, 24, 25, 26, 27);
- mounting a surface (28, 29, 30, 31, 32) of the first part on a surface of the second part;
- welding, using laser-type electromagnetic radiation, the surface (28, 29, 30, 31, 32) of the first part mounted on the surface of the second part, in order to secure said parts to each other.

11. Method according to the preceding claim, **characterized in that** the first silicon-based part includes single crystal silicon, doped single crystal silicon, polycrystalline silicon, doped polycrystalline silicon, porous silicon, silicon oxide, quartz, silica, silicon nitride or silicon carbide.

12. Method according to the preceding claim, **characterized in that** the first silicon-based part further includes at least a partial coating of silicon oxide, silicon nitride, silicon carbide or an allotrope of carbon.

13. Method for fabrication of a timepiece component (21) for a timepiece comprising the following steps:
- forming a first ceramic-based part (1, 2, 3, 4, 5, 6, 7, 8, 9, 10, 11, 12, 13, 14, 22, 23, 24, 25, 26, 27) and a second metal-based part (1, 2, 3, 4, 5, 6, 7, 8, 9, 10, 11, 12, 13, 14, 22, 23, 24, 25, 26, 27);
- mounting a surface (28, 29, 30, 31, 32) of the first part on a surface of the second part;
- welding, using laser-type electromagnetic radiation, the surface (28, 29, 30, 31, 32) of the first part mounted on the surface of the second part, in order to secure said parts to each other.

14. Method according to the preceding claim, **characterized in that** the first ceramic-based part includes photostructurable glass, borosilicate, aluminosilicate, quartz glass, zerodur, single crystal corundum, polycrystalline corundum, alumina, aluminium oxide, aluminium nitride, single crystal ruby, polycrystalline ruby, zirconium oxide, titanium oxide, titanium nitride, titanium carbide, tungsten nitride, tungsten carbide, boron nitride or boron carbide.

15. Method according to the preceding claim, **characterized in that** the first ceramic-based part further includes at least a partial coating of silicon oxide, silicon nitride, silicon carbide or an allotrope of carbon.

16. Method according to any of claims 10 to 15, **characterized in that** one of the first and second parts (1, 2, 3, 4, 5, 6, 7, 8, 9, 10, 11, 12, 13, 14, 22, 23, 24, 25, 26, 27) is opaque to the wavelength of said laser-type electromagnetic radiation in order to weld said surfaces of the first and second parts when said surfaces are one against the other.

17. Method according to any of claims 10 to 15, **characterized in that** an intermediate material is deposited at the interface of the first and second parts (1, 2, 3, 4, 5, 6, 7, 8, 9,10, 11, 12, 13, 14, 22, 23, 24, 25, 26, 27) when the latter are transparent to the wavelength of said laser-type electromagnetic radiation so as to induce sufficiently intense heating to weld said first and second parts.

18. Method according to any of claims 10 to 17, **characterized in that** the first part and/or the second part forms a balance spring (1, 22), an impulse pin (2), a balance (3, 27), a staff (4, 25), a roller (5), a pallets (6), a pallet-staff (7), a pallet-lever (8), a pallet-fork (9), a pallet-stone (10), a guard-pin (11), a wheel set (12), a wheel (13), an arbor (14), a pinion (15), a bar (16), a plate (17), an oscillating weight (18), a winding stem (19), a bearing or a jewel hole (20).

19. Method according to any of claims 10 to 18, **characterized in that** the second part includes an iron alloy, a copper alloy, nickel or an alloy thereof, titanium or an alloy thereof, gold or an alloy thereof, silver or an alloy thereof, platinum or an alloy thereof, ruthenium or an alloy thereof, rhodium or an alloy thereof, or palladium or an alloy thereof.
